Europäisches Patentamt

European Patent Office

Office européen des brevets

(19)

(11) Veröffentlichungsnummer : **0 150 175**
**B1**

# EUROPÄISCHE PATENTSCHRIFT

(12)

(45) Veröffentlichungstag der Patentschrift :
02.12.87

(21) Anmeldenummer : 83902254.8

(22) Anmeldetag : 27.07.83

(86) Internationale Anmeldenummer :
PCT/EP 83/00199

(87) Internationale Veröffentlichungsnummer :
WO/8500536 (14.02.85 Gazette 85/04)

(51) Int. Cl.⁴ : **B 01 J 19/08**, B 01 J 19/12,
B 01 D 59/34

(54) VORRICHTUNG ZUR FÜHRUNG EINES GASGEMISCHES IN EINEM GESCHLOSSENEN KREISLAUF.

(43) Veröffentlichungstag der Anmeldung :
07.08.85 Patentblatt 85/32

(45) Bekanntmachung des Hinweises auf die Patenterteilung : 02.12.87 Patentblatt 87/49

(84) Benannte Vertragsstaaten :
AT BE CH DE FR GB LI LU NL SE

(56) Entgegenhaltungen :
DE-A- 2 534 030
DE-A- 2 900 689
GB-A- 2 053 717
US-A- 4 097 384
US-A- 4 119 509

(73) Patentinhaber : **Carl Baasel Lasertechnik GmbH
Sandstrasse 21
D-8000 München 2 (DE)**

(72) Erfinder : **HOFFMANN, Peter
Im Betzengaiern 9
D-7000 Stuttgart 70 (DE)**

(74) Vertreter : **Klunker, Hans-Friedrich, Dr. et al
Patentanwälte Klunker . Schmitt-Nilson . Hirsch Winzererstrasse 106
D-8000 München 40 (DE)**

## Beschreibung

Die Erfindung betrifft eine Vorrichtung zur Führung eines molekularen Gases oder Gasgemisches, das wenigstens eine molekulare Komponente enthält, in einem geschlossenen Kreislauf, der einen mit Elektroden versehenen Kanal aufweist, insbesondere zur Erzeugung von Prozeßabläufen in dem entsprechenden Gas oder Gasgemisch, die mit seiner teilweisen Ionisierung und der Anregung von Molekülschwingungen in der entsprechenden Gaskomponente verbunden sind.

Prozeßabläufe in molekularen Gasen oder Gasgemischen, die wenigstens eine molekulare Komponente enthalten, welche durch die teilweise Ionisierung und die Anregung von Molekülschwingungen gekennzeichnet sind, dienen im wesentlichen den folgenden drei Zwecken : der Einleitung und Durchführung plasmachemischer Reaktionen, der Isotopentrennung und der Erzeugung eines laseraktiven Zustands.

Die Durchführung solcher Prozesse in offenen Systemen, d. h. Systemen, bei denen das Gas die Reaktionszone nur einmal durchströmt, sind für alle drei Anwendungsbereiche hinreichend bekannt (siehe z. B. DE-A-2 651 306 ; Proc. IEEE, 2 (1974) 1, p.4 ff ; Angew. Chemie, 84. Jahrg. (1972) 18, Seiten 876 ff ; IEEE Transactions on Plasma Science, PS-2 (1974), p. 297-307 ; J. Microwave Power, 10 (1975) 4, p. 433-440 ; Sov. Phys. Dokl. 23 (1978) 1, p. 44-46 ; J. Microwave Power, 12 (1977) 2, p. 155-166). Im Bereich des Lasers dominieren sogar Systeme mit geschlossenem Gaskreislauf ; diese Systeme sind gasdynamische, bzw. Gastransport-Laser (siehe z. B. Appl. Phys. 22 (1980), Seiten 421-427 ; Appl. Phys. Letters 15 (1969) 3, p. 91-93 ; ALAA-Paper 72-723 (1972) ; US-Patent Nr. 4,096,449).

Im Falle der Plasmachemie und der Isotopentrennung erzielt man mit einem offenen System i. a. geringe Reaktionsausbeuten, da stets nur ein Teil der Ausgangssubstanz an dem gewünschten Umsetzungsprozeß beteiligt ist. Im Falle des Lasers hingegen beruht der Nachteil der genannten Vorrichtungen darin, daß entweder passive Rückleitungen mit großem Querschnitt zur Verringerung der Reibungsverluste in der Strömung, oder aufwendige Pumpsysteme für die Gasumwälzung zur Überwindung dieser Reibungsverluste in Kauf genommen werden müssen. Ersteres führt zu einer großvolumigen, gewichtigen Bauweise, letzteres zu einem ungünstigen Gesamtwirkungsgrad.

Der Erfindung liegt die Aufgabe zugrunde, für den Fall der Anwendung in der Plasmachemie und der Isotopentrennung die Ausbeute, bezogen auf die Menge der Ausgangssubstanz, zu erhöhen ; im Falle der Anwendung als Laser eine kompakte Bauweise mit einem hohen Gesamtwirkungsgrad zu vereinen.

Die Aufgabe wird erfindungsgemäß dadurch gelöst, daß zwei gleichartig gestaltete Strömungskanäle mit vorzugsweise rechteckigem Querschnitt mit den Breitseiten unmittelbar nebeneinander angeordnet, oder konstruktiv integriert sind und an ihren nebeneinanderliegenden Enden durch zwei Vorrichtungen zur Gasumwälzung so miteinander verbunden sind, daß sie von dem Gas in entgegengesetzter Richtung durchströmt werden und in Teilbereichen beider Kanäle elektrisch isoliert von den Kanalwinden, Elektroden eingelassen sind, wobei die dem jeweils anderen Kanal nähergelegene Elektrode mit der entsprechenden Elektrode des anderen Kanals elektrisch verbunden, oder mit ihr konstruktiv identisch ist.

Für die Anwendung der Vorrichtung für Zwecke der Isotopentrennung und für die Verwendung als gasdynamischer oder Gastransport-Laser ist es weiterhin zweckmäßig, daß in den Schmalseiten der beiden Kanäle Öffnungen vorgesehen sind, die den Durchtritt elektromagnetischer Strahlung, vorzugsweise Laserstrahlung, im wesentlichen senkrecht zur Strömungsrichtung, erlauben.

Zur Zufuhr, bzw. Abfuhr von Gas ist es weiterhin vorteilhaft für die Anwendung der Vorrichtung für Zwecke der Plasmachemie und der Isotopentrennung, daß in die Kanalbreitseiten bzw. in die Elektroden, die einen Teil dieser Breitseiten bilden, zahlreiche Öffnungen kleinen Durchmessers eingelassen sind.

Ferner ist es für die Anwendung als gasdynamischer oder Gastransport-Laser vor Vorteil, wenn die beiden Kanäle durch zahlreiche Öffnungen kleinen Durchmessers in den beiden einander zugewandten Breitseiten miteinander verbunden sind.

Zur Kontrolle der Aufenthaltsdauer des Gases im Bereich der Wechselwirkung mit einer Entladung, die zwischen den genannten Elektroden erzeugt wird, bzw. einem Strahlungsfeld, das durch die genannten Öffnungen in den Kanalschmalseiten eingekoppelt wird, ist es bei einer Anzahl von Anwendungen von Vorteil, die Strömungsgeschwindigkeit des Gases in dieser Wechselwirkungszone dadurch zu erhöhen, daß der Querschnitt der beiden Strömungskanäle eine düsenartige Einschnürung aufweist.

Die mit der Erfindung erzielten Vorteile bestehen bei der Anwendung in den Bereichen Plasmachemie und Isotopentrennung darin, daß das Gas wiederholt die genannte Wechselwirkungszone durchströmt und auf diese Weise effizienter als bei einmaliger Durchströmung für die gewünschten Prozesse genutzt wird. Die Öffnungen in den Breitseiten erlauben die Zufuhr von frischem Gas, bzw. die Abfuhr der erzeugten Produkte, bzw. von angereicherter Isotopenmischung an den jeweils günstigen Stellen des Prozeßablaufs. Verändert man den Querschnitt des Kanals durch eine düsenförmige Einschnürung, so läßt sich infolge der veränderten Strömungsgeschwindigkeit die Aufenthaltsdauer des Gases in der Wechselwirkungszone der jeweiligen Reaktion optimal anpassen. Wählt man schließlich eine Düsenform, die das Auftreten einer Überschallströmung erlaubt, so läßt sich zusätzlich infolge der Abkühlung durch Expansion die Temperatur des Gases in der Wechselwirkungszone den optimalen Parametern für die gewünschte Reaktion anpassen.

Bei der Anwendung der Vorrichtung als gasdynamischer oder Gastransport-Laser ist es vorteilhaft, daß durch Vermeidung einer passiven Rückleitung des Gases eine kompakte Bauweise und ein geringer Energieaufwand für das Umwälzsystem erzielt werden. Weiterhin ist es von Vorteil, wenn durch die Öffnungen in den Schmalseiten die Wechselwirkungszonen beider Kanäle innerhalb eines U-förmig gefalteten optischen Resonators angeordnet werden. Durch eine zweimalige Strahlumlenkung um jeweils 90° in einem U-förmig gefalteten Resonator wird infolge des verschiedenen Reflexionsgrades der Spiegeloberflächen bei schrägem Lichteinfall, parallel, bzw. senkrecht zur Einfallsebene, die bevorzugte Polarisationsrichtung der Laserstrahlung eindeutig definiert und kann daher anschließend nach Durchtritt durch ein doppeltbrechendes Medium in zirkular polarisierte Strahlung umgewandelt werden. Es ist bekannt, daß letztere für zahlreiche Aufgaben in der Materialbearbeitung besonders geeignet ist. Ferner werden, da die Wechselwirkungszonen in entgegengesetzter Richtung durchströmt werden, die allgemein bei gasdynamischen und Gastransport-Lasern auftretende Asymmetrie des Strahlprofils in Strömungsrichtung aufgehoben. Dies trägt zur Verbesserung des Lasermodes im Nahfeld bzw. zur Verbesserung des Fokussierbarkeit des Laserstrahls bei. Die Verbindung der beiden Strömungskanäle durch Kapillaröffnungen in den einander zugewandten Breitseiten bewirkt folgendes : infolge des Druckabfalls im Verlaufe der Durchströmung eines Kanals ist der Druck vor der Wechselwirkungszone höher als dahinter. Daher wird durch eine Verbindung der genannten Art zwischen dem Bereich höheren Drucks des einen Kanals und dem Bereich niedrigeren Drucks des anderen Kanals die sich im Einlauf zur Wechselwirkungszone allmählich aufbauende Grenzschicht zum anderen Kanal hin abgesaugt. Diese Grenzschichtabsaugung ist für die Stabilität der Entladung von Nutzen, denn es ist bekannt, daß sich Entladungsinstabilitäten bevorzugt im Bereich der Strömungsgrenzschicht bilden. Falls erforderlich, kann die Strömungsgrenzschicht auch an den einander abgewandten Breitseiten der Kanäle durch geeignete konstruktive Maßnahmen abgesaugt werden. Die Vorteile einer düsenartigen Einschnürung gelten auch im Falle der Anwendung als gasdynamischer, bzw. als Gastransport-Laser.

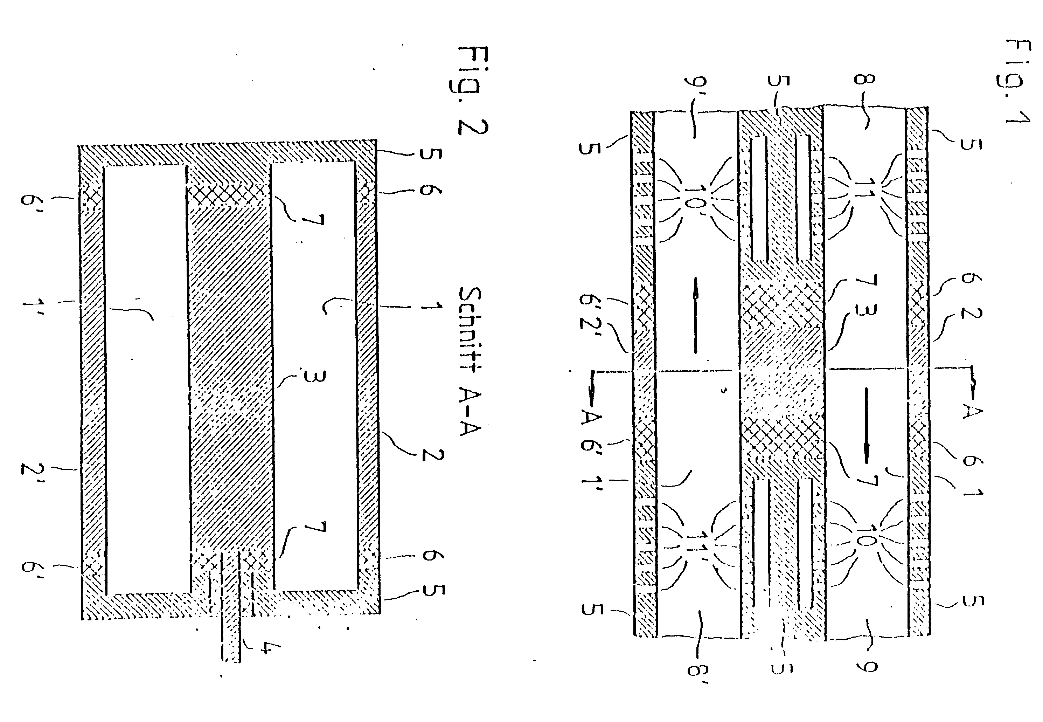

Ein Ausführungsbeispiel der Erfindung für die Anwendung im Bereich der Plasmachemie ist in Fig. 1 als Längsschnitt und in Fig. 2 als Querschnitt A-A dargestellt. Der Hauptanteil des Gases strömt in Pfeilrichtung durch die beiden Kanäle 1 bzw. 1'. Lediglich schematisch dargestellt ist die Anordnung der Außenelektroden 2 bzw. 2', sowie der gemeinsamen Mittelelektrode 3, welche durch den Anschluß 4 eine Verbindung nach außen besitzt. Diese Elektroden sind gegen die Kanalwände 5 durch Isolierstücke 6 bzw. 6' und 7, vorzugsweise aus Keramik bestehend, elektrisch getrennt. Diese Teile sind in an sich bekannter Weise vakuumdicht miteinander verbunden. Die Kanalenden, an denen das Gas eintritt, 8 bzw. 8' und jene, durch welches das Gas wieder austritt, 9 bzw. 9' sind so durch an sich bekannte Gasumwälzsysteme, wie Wälzkolbenverdichter, Axialverdichter, Radialverdichter, Seitenkanalverdichter oder Querstromgebläse miteinander verbunden, daß ein Gasumwälzsystem die Austrittsöffnung 9 mit der Eintrittsöffnung 8', ein zweites die Austrittsöffnung 9' mit der Eintrittsöffnung 8 verbindet. In den meisten Fällen ist es erforderlich, daß sich in den Austrittsöffnungen 9 bzw. 9' ebenfalls bekannte Wärmetauscher zur Abkühlung des Gases befinden. Zwischen den Elektroden 2 und 3, bzw. 2' und 3 wird zur Einleitung der gewünschten Reaktion ein elektrisches Gleich- oder Wechselfeld zur Erzeugung einer Glimmentladung angelegt. In dieser Entladung werden die Ausgangssubstanzen teilweise ionisiert und die Moleküle schwingungsmäßig angeregt, so daß sie bevorzugt die gewünschten chemischen Reaktionen eingehen können. Die erzeugten Produkte können nun entweder durch die Öffnungen 10 bzw. 10' abgesaugt, oder an den erwähnten Wärmetauschern ausgefroren werden. Der Ersatz von verbrauchten Ausgangssubstanzen kann mittels Gaszufuhr durch die Öffnungen 11 bzw. 11' geschehen. Das Verhältnis von umgewälzter zu neu zu- bzw. abgeführter Gasmenge läßt sich leicht durch Anzahl und Durchmesser der Öffnungen, bzw. durch geeignete Wahl der Druckdifferenz zu den nicht dargestellten äußeren Sammelleitungen den jeweiligen Gegebenheiten anpassen.

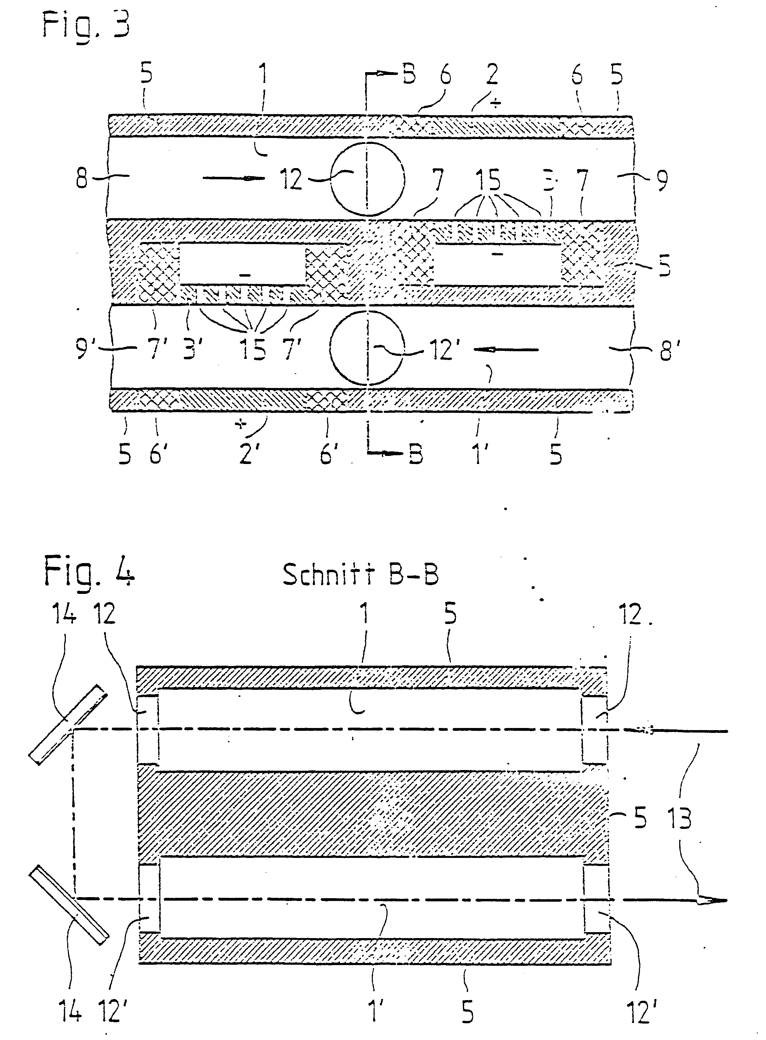

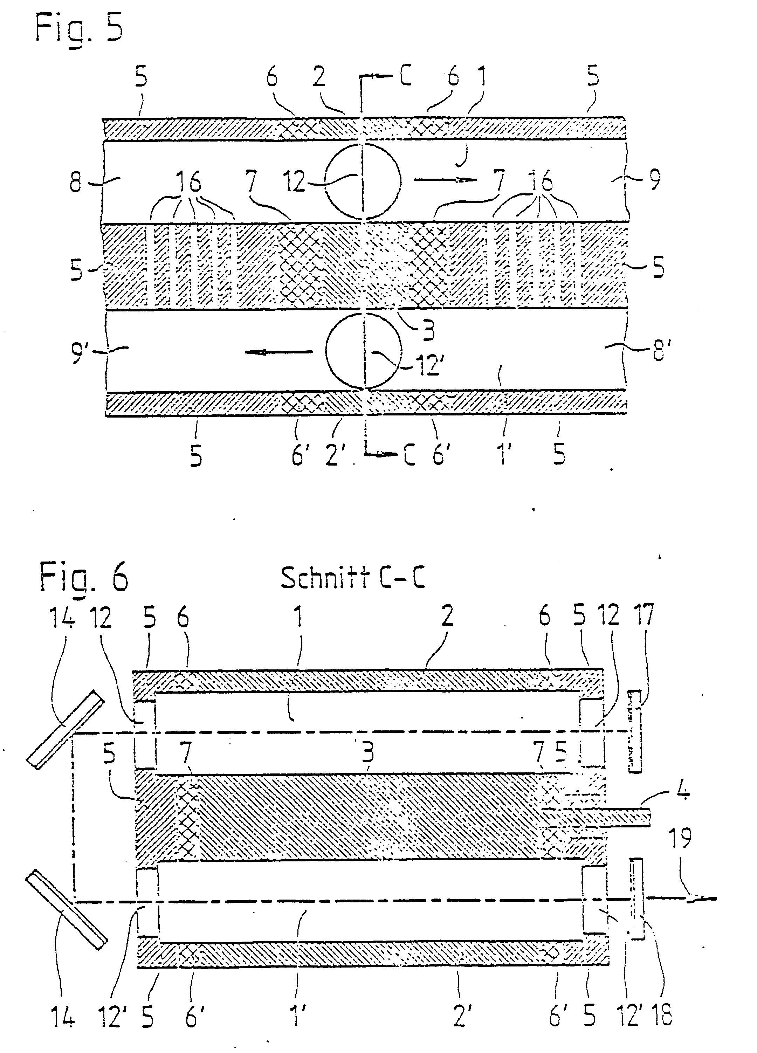

In Fig. 3 und Fig. 4 ist ein abgewandeltes Ausführungsbeispiel in der gleichen Weise wie bei Fig. 1 und Fig. 2 dargestellt. Es handelt sich um eine Variante zur Isotopentrennung. Zusätzlich zu jenen Bauteilen und Funktionen, welche mit denen von Fig. 1 und Fig. 2 übereinstimmen, sind Öffnungen 12 bzw. 12' in den Schmalseiten der Kanäle vorgesehen. Sie sind durch an sich bekannte, nicht dargestellte Druckfenster abgeschlossen. Die Elektroden 2 bzw. 2' und 3 bzw. 3' sind gegenüber diesen Öffnungen stromab versetzt. Das Gas z. B. bestehend aus den Isotopengemischen $238_{UF6}$ und $235_{UF6}$ tritt im Bereich der Öffnungen 12 bzw. 12' in Wechselwirkung mit einem Laserstrahl 13, umgelenkt durch die Spiegel 14. Dabei wird eine Isotopenkomponente selektiv schwingungsmäßig angeregt, z. B. durch Laserstrahlung im Wellenlängenbereich von 16 Mikrometer. Anschließend tritt es in eine Gleichentladung ein, wobei die Elektroden 2 bzw. 2' als Anoden, 3 bzw. 3' als Kathoden dienen. Die schwingungsangeregte Komponente wird bevorzugt ionisiert und infolge der Wechselwirkung der positiv geladenen Ionen mit dem elektrischen Feld im Bereich der Kathode angereichert. Die Anordnung der Elektroden kann natürlich auch sinngemäß vertauscht sein. In den Kathoden befinden sich Öffnungen 15, durch welche das angereicherte Gemisch abgesaugt wird.

In Fig. 5 und Fig. 6 ist ein weiteres abgewandeltes Ausführungsbeispiel in gleicher Weise wie bei Fig. 1 und Fig. 2 dargestellt. Diese Variante dient der Anwendung als Gastransport-Laser. Wie in Fig. 3 und Fig. 4 sind Öffnungen 12 und 12' in die Schmalseiten der Kanäle eingelassen. Sie sind entweder durch an sich bekannte, für die Laserstrahlung transparente Druckfenster abgeschlossen, oder druckdicht mit den Umlenkspiegeln 14 bzw. dem totalreflektierenden Laserspiegel 17 und dem teilweise durchlässigen Laserspiegel 18, durch welchen der Laserstrahl 19 ausgekoppelt wird, verbunden. Der Resonator kann auch mehrfach gefaltet bzw. ein Resonator vom astabilen Typus sein. Die Entladung, die durch ein an die Elektroden 2 bzw. 2' und 3 angelegtes Gleich- oder Wechselfeld erzeugt wird, ist im wesentlichen der Wechselwirkungszone mit dem Strahlungsfeld, das sich im Resonator ausbildet, überlagert. Nicht ausgeschlossen durch diese Darstellung ist die an sich bekannte vorteilhafte Segmentierung der Elektroden, bzw. ihre Bedeckung durch eine dielektrische Schicht. Beide Maßnahmen dienen der Stabilisierung der Entladung. Die Öffnungen 16 dienen der Grenzschichtabsaugung im Einlaufbereich zur Entladung, eine Maßnahme, die ebenfalls die Stabilisierung der Entladung fördert. Nicht ausgeschlossen durch die Darstellung ist gleichfalls die Gestaltung der Kanäle in konvergent-divergenter Düsenform. Dadurch werden neben der Erhöhung der Strömungsgeschwindigkeit in der Entladungszone, mit hieraus resultierender höherer Leistungsdichte des erzielbaren Strahlungsfeldes die Reibungsverluste der Strömung in den Kanälen verringert. Die übrigen Bauelemente und Funktionen sind jenen von Fig. 1 und Fig. 2 gleich.

### Patentansprüche

1. Vorrichtung zur Führung eines molekularen Gases oder Gasgemisches, das wenigstens eine molekulare Komponente enthält, in einem geschlossenen Kreislauf, der einen mit Elektroden ausgestatteten Kanal aufweist, insbesondere zur Erzeugung von Prozeßabläufen in dem entsprechenden Gas oder Gasgemisch, die mit seiner teilweisen Ionisierung und der Anregung von Molekülschwingungen in der entsprechenden Gaskomponente verbunden sind, dadurch gekennzeichnet, daß zwei gleichartig gestaltete Strömungskanäle (1, 1') mit vorzugsweise rechteckigem Querschnitt mit den Breitseiten unmittelbar nebeneinander angeordnet oder konstruktiv integriert sind und an ihren nebeneinanderliegenden Enden durch zwei Vorrichtungen zur Gasumwälzung so miteinander verbunden sind, daß sie von dem Gas in entgegengesetzter Richtung durchströmt werden und in Teilbereichen beider Kanäle (1, 1'), elektrisch isoliert von den Kanalwänden (5) Elektroden (2, 2', 3) eingelassen sind, wobei die dem jeweils anderen Kanal (1, 1') nähergelegene Elektrode (3) mit der entsprechenden Elektrode (3) des anderen Kanals elektrisch verbunden, oder mit ihr konstruktiv identisch ist.

2. Vorrichtung nach Anspruch 1, dadurch gekennzeichnet, daß in den Schmalseiten der beiden Kanäle (1, 1') Öffnungen (12, 12') vorgesehen sind, die den Durchtritt von elektromagnetischer Strahlung, vorzugsweise Laserstrahlung (13), im wesentlichen senkrecht zur Strömungsrichtung, erlauben.

3. Vorrichtung nach den Ansprüchen 1 und 2, dadurch gekennzeichnet, daß in die Kanalbreitseiten bzw. in die Elektroden, die einen Teil dieser Breitseiten bilden, zahlreiche Öffnungen (10, 10', 11, 11') kleinen Durchmessers eingelassen sind.

4. Vorrichtung nach Anspruch 2, dadurch gekennzeichnet, daß die beiden Kanäle (1, 1') durch zahlreiche Öffnungen (16) kleinen Durchmessers in den beiden einander zugewandten Breitseiten miteinander verbunden sind.

5. Vorrichtung nach den Ansprüchen 1 mit 5, dadurch gekennzeichnet, daß der Querschnitt der beiden Strömungskanäle eine düsenartige Einschnürung aufweist.

### Claims

1. An apparatus for circulating a molecular gas or gas mixture containing at least one molecular component in a closed circuit comprising a channel equipped with electrodes, in particular for generating process sequences in the corresponding gas or gas mixture which involve its partial ionization and the excitation of molecular oscillations in the corresponding gas component, characterized in that two similarly designed flow channels (1, 1') with a preferably rectangular crosssection are disposed or constructionally integrated with their broad sides directly beside each other and interconnected at their adjacent ends by two gas circulating means in such a way that the gas flows through them in opposite directions and electrodes (2, 2', 3) are embedded in partial areas of each channel (1, 1') electrically insulated from the channel walls (5), the electrode (3) closer to the other channel (1, 1') being electrically connected to the corresponding electrode (3) of the other channel, or constructionally identical therewith.

2. An apparatus according to claim 1, characterized in that openings (12, 12') are provided in the narrow sides of each channel (1, 1') which allow for the passage of electromagnetic radiation, preferably laser radiation (13), substantially perpendicular to the direction of flow.

3. An apparatus according to claims 1 and 2, characterized in that a plurality of small diameter openings (10, 10', 11, 11') are set in the broad sides of the channels or in the electrodes which form part of these broad sides.

4. An apparatus according to claim 2, characterized in that the two channels (1, 1') are interconnected by a plurality of small diameter openings (16) in the two broad sides facing each other.

5. An apparatus according to claims 1 to 5, characterized in that the cross-section of each flow channel has a nozzle-like constriction.

**Revendications**

1. Dispositif de conduite en circuit fermé d'un gaz moléculaire ou d'un mélange de gaz, contenant au moins un composant moléculaire, circuit qui présente un canal équipé d'électrodes, notamment pour produire, dans le gaz ou le mélange gazeux correspondant, des réactions liées à son ionisation partielle et à l'excitation d'oscillations moléculaires dans les composants gazeux correspondants, caractérisé en ce que deux canaux d'écoulement de forme identique (1, 1') de section transversale de préférence rectangulaire sont disposés directement côte à côte par leur grand côté ou bien sont intégrés structurellement et reliés à leurs extrémités accolées par deux dispositifs d'agitation du gaz, de manière à être traversés à contre courant par le gaz et en ce que dans des parties des deux canaux (1, 1'), sont placées des électrodes (2, 2', 3) isolées électriquement des parois des canaux (5), l'électrode (3) la plus proche de chaque autre canal (1, 1') étant reliée électriquement avec l'électrode correspondante (3) de l'autre canal ou bien étant structurellement identique à elle.

2. Dispositif selon la revendication 1, caractérisé en ce que dans les petits côtés des deux canaux (1, 1') sont prévues des ouvertures (12, 12') permettant le passage d'un rayonnement électromagnétique, de préférence un rayonnement laser (13), sensiblement transversal au sens de l'écoulement gazeux.

3. Dispositif selon la revendication 1 et 2, caractérisé en ce que, dans les grands côtés des canaux, ou dans les électrodes qui en forment une partie, sont disposées de nombreuses ouvertures (10, 10', 11, 11') de petit diamètre.

4. Dispositif selon la revendication 2, caractérisé en ce que les deux canaux (1, 1') sont reliés mutuellement par de nombreuses ouvertures (16) de petit diamètre dans les deux grands côtés se faisant face mutuellement.

5. Dispositif selon l'une des revendications 1 à 4, caractérisé en ce que la section transversale des deux canaux d'écoulement présente un étranglement en forme de tuyère.

Fig. 1

Fig. 2

Schnitt A-A

Fig. 3

Fig. 4     Schnitt B-B

# Fig. 5

# Fig. 6    Schnitt C-C